Europäisches Patentamt

European Patent Office

Office européen des brevets

(19)

(11) **EP 0 935 858 B1**

(12) **FASCICULE DE BREVET EUROPEEN**

(45) Date de publication et mention
de la délivrance du brevet:
**01.06.2005 Bulletin 2005/22**

(21) Numéro de dépôt: **97913247.9**

(22) Date de dépôt: **04.11.1997**

(51) Int Cl.[7]: **H04L 9/06**

(86) Numéro de dépôt international:
**PCT/FR1997/001975**

(87) Numéro de publication internationale:
**WO 1998/020643 (14.05.1998 Gazette 1998/19)**

(54) **PROCEDE DE DECORRELATION DE DONNEES**

DATENDEKORRELATIONSVERFAHREN

METHOD FOR DATA DECORRELATION

(84) Etats contractants désignés:
**AT BE CH DE DK ES FI FR GB GR IE IT LI LU MC
NL PT SE**

(30) Priorité: **04.11.1996 FR 9613411**

(43) Date de publication de la demande:
**18.08.1999 Bulletin 1999/33**

(73) Titulaire: **CENTRE NATIONAL DE
LA RECHERCHE SCIENTIFIQUE
75016 Paris Cédex (FR)**

(72) Inventeur: **VAUDENAY, Serge
F-91220 Brétigny sur Orge (FR)**

(74) Mandataire: **Phélip, Bruno et al
c/o Cabinet Harlé & Phélip
7, rue de Madrid
75008 Paris (FR)**

(56) Documents cités:
- KILIAN J ET AL: "HOW TO PROTECT DES
AGAINST EXHAUSTIVE KEY SEARCH"
ADVANCES IN CRYPTOLOGY - CRYPTO '96,
16TH. ANNUAL INTERNATIONAL CRYPTOLOGY
CONFERENCE SANTA BARBARA, AUG. 18 - 22,
1996. PROCEEDINGS, no. CONF. 16, 18 août
1996, KOBLITZ N (ED ), pages 252-267,
XP000626592 cité dans la demande
- EVEM S ET AL: "A CONSTRUCTION OF A
CIPHER FROM A SINGLE PSEUDORANDOM
PERMUTATION" ADVANCES IN CRYPTOLOGY -
ASIACRYPT, FUJIYOSHIDA, NOV. 11 - 14, 1991,
no. CONF. 1, 11 novembre 1991, HIDEKI
IMAI;RIVEST R L; TSUTOMU MATSUMOTO,
pages 210-224, XP000473951 cité dans la
demande
- SHEPHERD S J: "A HIGH SPEED SOFTWARE
IMPLEMENTATION OF THE DATA ENCRYPTION
STANDARD" COMPUTERS & SECURITY
INTERNATIONAL JOURNAL DEVOTED TO THE
STUDY OF TECHNICAL AND FINANCIAL
ASPECTS OF COMPUTER SECURITY, vol. 14,
no. 4, 1 janvier 1995, pages 349-357,
XP000523914

## Description

La présente invention concerne un procédé de décorrélation de données enregistrées sur un support exploitable par une unité de calcul.

On connaît de nombreux procédés de chiffrement de données ou de cryptographies. Ils assurent le codage des données de telle sorte que celles-ci ne soient lisibles que par un destinataire autorisé, détenteur d'une clef. Leur importance se développe en même temps que les réseaux d'information et leur utilisation devrait se généraliser en conformité avec la législation en vigueur.

Certains procédés de chiffrement permettent d'assurer une sécurité inconditionnelle, mais nécessitent des moyens techniques importants qui freinent la communication ou qui rendent la gestion des échanges de clefs très coûteuse et certains ne peuvent même pas pratiquement être utilisés.

Ainsi, le chiffrement de Vernam nécessite-t-il, pour chiffrer un flot de messages clairs, l'utilisation d'un flot de clefs de même longueur. La synchronisation de l'émetteur et du récepteur est alors difficile à réaliser.

Les conditions de la sécurité inconditionnelle ont été formalisées par Shannon en 1949 qui, partant de la théorie de l'information, a pu montrer que la sécurité inconditionnelle impose à la clef d'être au moins égale à la taille totale des messages que l'on peut chiffrer sans la corrompre.

Ainsi, pour assurer la protection de données enregistrées sur un support exploitable par une unité de calcul et susceptible d'être transmise, réalise-t-on une opération de chiffrement. Pour que le chiffrement d'une série de messages soit sûr, il est nécessaire de rendre indépendantes ces opérations sur un faible nombre de messages.

La principale fonction de chiffrement utilisée actuellement est le standard de chiffrement numérique DES (Data Encryption Standard) adopté par le gouvernement américain. Cette fonction est fondée sur l'itération (seize fois) de fonctions simples dans un schéma dit de "Feistel". Le but du grand nombre d'itérations est d'affaiblir la corrélation des messages chiffrés.

De nombreux documents décrivent le DES et en particulier, l'ouvrage intitulé "Cryptographie, théorie et pratique" de Douglas STINSON (International Thomson Publishing).

Pour améliorer la fiabilité du cryptage et se prémunir contre des recherches exhaustives, on a proposé d'augmenter la longueur de la clef

ou même d'introduire une décorrélation d'ordre 1. C'est ce qu'ont proposé les auteurs des deux articles suivants : Advances in Cryptology - CRYPTO '96, 16th. Annual International Cryptology Conference Santa Barbara, 18-22 Août 1996, Proceedings no. Conf. 16, 18 Août 1996, Koblitz N (ED), pages 252-267 de KILIAN J. et al., et Advances in Cryptology - ASIACRYPT. Fujiyoshida, 11-14 Novembre 1991, no. Conf. 1, 11 Novembre 1991, Hideki Imai ; Rivest R L; Tsutomu Matsumoto, pages 210-224 de EVEM S. et al.

De telles mesures ne suffisent toutefois pas à se prémunir contre les attaques permises par la cryptanalyse linéaire et différentielle récemment développée.

Le but de l'invention est donc un procédé de cryptographie de données qui assure une sécurité optimale et peut être réalisé avec des fonctions relativement simples qui nécessitent des moyens de calcul limités.

A cet effet, l'invention concerne un procédé de cryptographie de données enregistrées sur un support exploitable par une unité de calcul dans lequel ladite unité de calcul traite une information d'entrée x à l'aide d'une clef pour fournir une information codée F(x) par une fonction F.

Selon l'invention, la fonction F utilise un module de décorrélation $M_K$, de rang au moins égal à deux, tel que $F(x) = [F'(M_K)](x)$, où K est une clef aléatoire et F' une fonction cryptographique.

De façon générale, un module de décorrélation assure la transformation d' un message x par la fonction $M_K$ impliquant une clef, de telle sorte que la distribution $M_K(x_1),..., M_K(x_t)$ obtenue à partir de t messages différents quelconques avec une variation aléatoire de la clef ait une répartition uniforme ou quasi uniforme.

Un tel module de décorrélation peut donc être utilisé au sein d'un dispositif de cryptographie de données, éventuellement après un dispositif de découpage d'informations fournissant, à partir de l'information d'entrée x, des données $x_o$ de longueur fixe.

Sa mise en oeuvre permet que t blocs de messages chiffrés $c_1,..., c_t$ par la fonction F ne donnent aucune information statistique sur cette fonction.

Dans différents modes de réalisation ayant chacun des avantages particuliers, l'invention peut présenter les caractéristiques suivantes selon toutes leurs combinaisons techniquement possibles :

- l'information d'entrée x est découpée en éléments $x_o$ de longueur fixe,
- la fonction F est de la forme $F(x) = F'(M_K(x))$,
- la fonction de codage F' est découpée en deux fonctions F" et G" et

$$F(x) = F''(M_K(G''(x))),$$

- le module de décorrélation $M_K$ est inversible,
- le module de décorrélation est $M_K(x) = ax + b$, où $K = (a, b)$ avec $a \neq 0$,
- le module de décorrélation est $M_K(x) = \dfrac{a}{x + b} + c$, où $K = (a, b, c)$ avec $a \neq 0$,
- la fonction F est une fonction de Feistel appliquant n itérations chacune avec une fonction Fi,
- le module de décorrélation $M_K$ est non-inversible,
- à chaque itération, $F_i(x) = F'_i(M_K(x))$,
- à chaque itération, $F_i(x) = F''_i(M_K(G''_i(x)))$
- $M_K(x) = k_1 + k_2 x + k_3 x^2 + ... + k_t x^{t-1}$,

où $K = (k_1, k_2, k_3,..., k_t)$.

L'invention sera maintenant décrite plus en détail en référence à la figure et à des modes de réalisation particuliers.

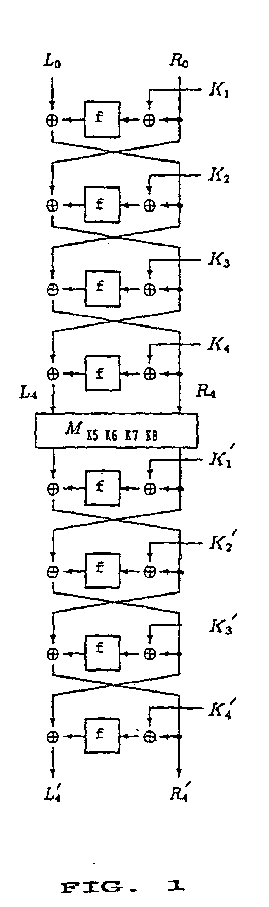

La Figure 1 présente l'application de l'invention dans un schéma de Feistel à huit itérations.

Le procédé de chiffrement de données enregistrées de l'invention met avantageusement en oeuvre une clef secrète utilisant un module de décorrélations $M_K$ tel que $F(x) = [F'(M_K)](x)$, où K est une clef aléatoire et F' une fonction de codage.

La fonction F' est avantageusement découpée en deux fonctions F" et G" et $F(x) = F''(M_K(G''(x)))$.

L'utilisation de tels modules de décorrélation peut être appliquée à des fonctions F inversibles et également à des fonctions F quelconques.

Lorsque la fonction F est inversible, le procédé de cryptographie est un procédé de chiffrement ; le détenteur de la clef peut alors recomposer l'information d'entrée. Lorsque la fonction F n'est pas inversible, le procédé de cryptographie permet l'authentification des données.

Ainsi, pour une valeur du paramètre t = 2, la fonction $M_K$ est avantageusement :

$$M_K(x) = ax + b$$

où $K = (a, b)$ avec $a \neq 0$, et où le signe + représente une translation de l'espace des messages.

La décorrélation est alors parfaite à l'ordre 2. L'opération inverse est :

$$(M_K)^{-1}(y) = a^{-1} y - a^{-1} b$$

Dans un autre mode de réalisation pour une valeur du paramètre t = 3, la fonction $M_K$ est avantageusement :

$$M_K(x) = \frac{a}{x + b} + c,$$

où $K = (a, b, c)$ avec $a \neq 0$. On convient alors que dans cette opération, $\frac{1}{0} = 0$. L'opération inverse est alors :

$$(M_k)^{-1}(y) = \frac{a}{y - c} - b$$

L'utilisation d'un module de décorrélation $M_K$ est également avantageuse dans le cas de fonctions non inversibles.

On utilise une structure algébrique telle que des messages qui définit l'addition et la multiplication. On utilise par exemple l'arithmétique dans un corps fini ou encore une arithmétique modulo un nombre premier tronquée.

Pour toute valeur du paramètre t, on peut alors proposer une fonction de décorrélation de la forme $M_K(x) = k_1 + k_2 x + k_3 x^2 + ... + k_t x^{t-1}$, où $K = (k_1, k_2, k_3,..., k_t)$.

Le schéma d'un tel chiffrement de Feistel est représenté sur la Figure 1.

Un bloc de texte clair x de 64 bits : on écrit alors x = LoRo où Lo contient les 32 premiers bits de la chaîne x et Ro contient les 32 bits restants.

Quatre itérations d'une même fonction f sont appliquées à x. On calcule $L_i R_i$, pour $1 \leq i \leq 4$ suivant la règle :

$$L_i = R_{i-1}$$

$$R_i = L_{i-1} + f(R_{i-1} + K_i)$$

où le signe + représente le ou-exclusif bit-à-bit de deux chaînes ; $K_1$, $K_2$, $K_3$ $K_4$ sont des chaînes de 32 bits calculées à partir de K.

Le résultat est $(L_4, R_4)$. Il est assemblé sous la forme $L_4 R_4$ auquel on applique le module de décorrélation par exemple :

$$K_5 K_6 \times L_4 R_4 + K_7 K_8$$

$K_5$, $K_6$, $K_7$, $K_8$ étant chacun une chaîne de 32 bits.

Le résultat sert d'entrée $L'_o R'_o$ à une deuxième fonction selon le schéma de Feistel, analogue à la précédente qui produit un résultat $L'_4 R'_4 = F(x)$.

$K'_1$, $K'_2$, $K'_3$, $K'_4$ sont également des chaînes de 32 bits.

La clef est ici $K_1$, $K_2$, $K_3$ $K_4$, $K'_1$, $K'_2$, $K'_3$, $K'_4$, $K_5$, $K_6$, $K_7$, $K_8$.

De manière générale, les fonctions F" et G" peuvent être n'importe quelle fonction de cryptage.

On décrira maintenant en détail deux modes de réalisation particuliers :

Dans le premier mode de ces modes de réalisation préféré, on utilise un schéma de FEISTEL à huit itérations. G" est l'application successive de quatre fonctions $f_1$, $f_2$, $f_3$, $f_4$ et F" est l'application successive de quatre fonctions $f_5$, $f_6$, $f_7$, $f_8$, les fonctions $f_i$ étant définies à partir d'une fonction f et de la clef aléatoire K.

La fonction f est elle même définie de la manière suivante:

x étant un mot de 32 bits, on définit d'abord $\varphi(x)$ :

$$\varphi(x) = x + 256.S(x \bmod 256) \bmod 2^{32}$$

où S est par exemple, une fonction représentée par les tables de l'annexe 1, u représenté en abscisse et v en ordonnée étant chacun des nombres hexadécimaux, au couple (u,v) = x est associé la valeur S(x) ayant la valeur indiquée aux coordonnées (u,v).

f(x) est définie par:

$$f(x) = \varphi(R_L^{11}(\varphi(x)) + r \bmod 2^{32})$$

où $R_L^{11}$ est une permutation circulaire de onze bits vers la gauche et r est une constante, par exemple elle même définie par s de la manière suivante:

$$r = b7s15162$$

et

$$s = \sum_{i=0}^{\infty} \frac{1}{i!} = b7e15162 \; 8aed2a \; 6abf71 \; 58809c \; f4f3c7 \; 62e716...$$

La clef K est une chaîne de 256 bits, constituée par la concaténation de huit chaînes $K_i$ de 64 bits chacune:
K= $(K_1 K_2 K_{3....} K_8)$

Le schéma de FEISTEL est alors mis en oeuvre avec les fonctions $f_i$ :

$$f_i(x) = f(x \oplus k_i)$$

où les $k_i$ sont alors définis comme suit :

| i | 1 | 2 | 3 | 4 |
|---|---|---|---|---|
| $k_i$ | $K_1$ | $K_1 \oplus K_3$ | $K_1 \oplus K_3 \oplus K_4$ | $K_1 \oplus K_4$ |

| i | 5 | 6 | 7 | 8 |
|---|---|---|---|---|
| $k_i$ | $K_2$ | $K_2 \oplus K_3$ | $K_2 \oplus K_3 \oplus K_4$ | $K_2 \oplus K_4$ |

le module de décorrélation est :

$$M(uv) = (uv \oplus K_5 K_6) x K_7 K_8$$

Dans le deuxième mode de ces modes de réalisation préféré, on utilise un schéma de FEISTEL à trente deux itérations :

Par rapport au premier exemple, la clef K est une chaîne de 2048 bits, r peut conserver sa valeur et la fonction f est remplacée par f' :

$$f'(x) = R_L^{11}(x) + r \bmod 2^{32}$$

les fonctions $f_i$ sont remplacées par les fonctions $f_i'$ :

$$f'_i(x) = f'(x.K_{2i-1} + K_{2i} \bmod 2^{32} - 5)$$

ANNEXE 1

Table 1 :

| | S(u,v) pour v < 8 | | | | | | | |
|---|---|---|---|---|---|---|---|---|
| | .0 | .1 | .2 | .3 | .4 | .5 | .6 | .7 |
| 0. | 8aed2a | 6abf71 | 58809c | f4f3c7 | 62e716 | 0f38b4 | da56a7 | 84d904 |
| 1. | bb1185 | eb4f7c | 7b5757 | f59584 | 90cfd4 | 7d7c19 | bb4215 | 8d9554 |
| 2. | cfbfa1 | c877c5 | 6284da | b79cd4 | c2b329 | 3d20e9 | e5eaf0 | 2ac60a |
| 3. | 78e537 | d2b95b | b79d8d | caec64 | 2cle9f | 23b829 | b5c278 | 0bf387 |
| 4. | bbca06 | 0f0ff8 | ec6d31 | beb5cc | eed7f2 | f0bb08 | 801716 | 3bc60d |
| 5. | 94640d | 6ef0d3 | d37be6 | 7008e1 | 86d1bf | 275b9b | 241deb | 64749a |
| 6. | f10de5 | 13d3f5 | 114b8b | 5d374d | 93cb88 | 79c7d5 | 2ffd72 | ba0aae |
| 7. | 571121 | 382af3 | 41afe9 | 4f77bc | f06c83 | b8ff56 | 75f097 | 9074ad |
| 8. | 5a7db4 | 61dd8f | 3c7554 | 0d0012 | 1fd56e | 95f8c7 | 31e9c4 | d7221b |
| 9. | c6b400 | e024a6 | 668ccf | 2e2de8 | 6876e4 | f5c500 | 00f0a9 | 3b3aa7 |
| a. | d1060b | 871a28 | 01f978 | 376408 | 2ff592 | d9140d | b1e939 | 9df4b0 |
| b. | c703f5 | 32ce3a | 30cd31 | c070eb | 36b419 | 5ff33f | b1c66c | 7d70f9 |
| c. | 6d8d03 | 62803b | c248d4 | 14478c | 2afb07 | ffe78e | 89b9fe | ca7e30 |
| d. | df2be6 | 4bbaab | 008ca8 | a06fda | ce9ce7 | 048984 | 5a082b | a36d61 |
| e. | 558aa1 | 194177 | 20b6e1 | 50ce2b | 927d48 | d7256e | 445e33 | 3cb757 |
| f. | 6b6c79 | a58a9a | 549b50 | c58706 | 90755c | 35e4e3 | 6b5290 | 38ca73 |

Table 2 :

| S(u,v) pour v ≥ 8 | | | | | | | |
|---|---|---|---|---|---|---|---|
| | .8 | .9 | .a | .b | .c | .d | .e | .f |
| 0. | 5190cf | ef324e | 773892 | 6cfbe5 | f4bf8d | 8d8c31 | d763da | 06c80a |
| 1. | f7b46b | ced55c | 4d79fd | 5f24d6 | 613c31 | c3839a | 2ddf8a | 9a276b |
| 2. | cc93ed | 874422 | a52ecb | 238fee | e5ab6a | dd835f | d1a075 | 3dOa8f |
| 3. | 37df8b | b300d0 | 1334a0 | d0bd86 | 45cbfa | 73a616 | 0ffe39 | 3c48cb |
| 4. | f45a0e | cb1bcd | 289b06 | cbbfea | 21ad08 | e1847f | 3f7378 | d56ced |
| 5. | 47dfdf | b96632 | c3eb06 | 1b6472 | bbf84c | 26144e | 49c2d0 | 4c324e |
| 6. | 7277da | 7ba1b4 | af1488 | d8e836 | af1486 | 5e6c37 | ab6876 | fe690b |
| 7. | 9a787b | c5b9bd | 4b0c59 | 37d3ed | e4c3a7 | 939621 | Sedab1 | f57d0b |
| 8. | bed0c6 | 2bb5a8 | 7804b6 | 79a0ca | a41d80 | 2a4604 | c311b7 | 1de3e5 |
| 9. | e6342b | 302a0a | 47373b | 25f73e | 3b26d5 | 69fe22 | 91ad36 | d6a147 |
| a. | e14ca8 | e88ee9 | 110b2b | d4fa98 | eed150 | ca6dd8 | 932245 | ef7592 |
| b. | 391810 | 7ce205 | 1fed33 | f6d1de | 9491c7 | dea6a5 | a442e1 | 54c8bb |
| c. | 60c08f | 0d61f8 | e36801 | df66d1 | d8f939 | 2e52ca | ef0653 | 199479 |
| d. | 1e99f2 | fbe724 | 246d18 | b54e33 | Scac0d | d1ab9d | fd7988 | a4b0c4 |
| e. | 2b3bd0 | 0fb274 | 604318 | 9cac11 | 6cedc7 | e771ae | 0358ff | 752a3a |
| f. | 3fd1aa | a8dab4 | 0133d8 | 0320e0 | 790968 | c76546 | b993f6 | c8ff3b |

## Revendications

1. Procédé de cryptographie de données enregistrées sur un support exploitable par une unité de calcul dans lequel ladite unité de calcul traite une information d'entrée x à l'aide d'une clef pour fournir une information codée F(x) par une fonction F,
   **caractérisé en ce que** la fonction F utilise un module de décorrélation $M_K$, de rang au moins égal à deux, tel que $F(x) = [F'(M_K)](x)$, où K est une clef aléatoire et F' une fonction cryptographique.

2. Procédé de cryptographie selon la revendication 1, **caractérisé en ce que** l'information d'entrée x est découpée en éléments $x_O$ de longueur fixe.

3. Procédé de cryptographie selon l'une quelconque des revendications 1 et 2, **caractérisé en ce que** la fonction F est de la forme $F(x) = F'(M_K(x))$.

4. Procédé de cryptographie selon l'une des revendications 1 et 2, **caractérisé en ce que** la fonction de codage F' est découpée en deux fonctions F'' et G'' et que

$$F(x) = F''(M_K(G''(x))).$$

5. Procédé de cryptographie selon l'une des revendications 1 à 4, **caractérisé en ce que** le module de décorrélation $M_K$ est inversible.

6. Procédé de cryptographie selon la revendication 5, **caractérisé en ce que** le module de décorrélation est $M_K(x) = ax + b$, où $K = (a, b)$ avec $a \neq 0$.

7. Procédé de cryptographie selon la revendication 5, **caractérisé en ce que** le module de décorrélation est $M_K(x)$ $\frac{a}{x+b} + c$, où $K = (a, b, c)$ avec $a \neq 0$.

8. Procédé de cryptographie selon l'une des revendications 1 à 4, **caractérisé en ce que** le module de décorrélation $M_K$ est non-inversible.

9. Procédé de cryptographie selon la revendication 5, **caractérisé en ce que** la fonction F est une fonction de Feistel appliquant n itérations chacune avec une fonction $F_i$.

10. Procédé de cryptographie selon la revendication 9, **caractérisé en ce que**, à chaque itération, $F_i(x) = F'_i(M_K(x))$.

11. Procédé de cryptographie selon la revendication 9, **caractérisé en ce que**, à chaque itération, $F_i(x) = F''_i(M_K(G''_i(x)))$.

12. Procédé de cryptographie selon la revendication 11, **caractérisé en ce que** $M_K(x) = k_1 + k_2 x + k_3 x^2 + ... + k_t x^{t-1}$, où $K = (k_1, k_2, k_3,..., k_t)$.

**Patentansprüche**

1. Kryptographieverfahren für auf einem Arbeitsmedium gespeicherte Daten mittels einer Berechnungseinheit, wobei die Berechnungseinheit eine Eingangsinformation x mit Hilfe eines Schlüssels verarbeitet, um eine durch eine Funktion F kodierte Information F(x) bereitzustellen,
   **dadurch gekennzeichnet, dass** die Funktion F ein Dekorrelationsmodul $M_K$ mit einem Rang mindestens gleich zwei derart benutzt, dass $F(x) = [F' (M_K)] (x)$, wobei K ein zufälliger Schlüssel und F' eine kryptographische Funktion ist.

2. Kryptographieverfahren nach Anspruch 1, **dadurch gekennzeichnet, dass** die Eingangsinformation x in Elemente $x_0$ fester Länge aufgeteilt wird.

3. Kryptographieverfahren nach einem der Ansprüche 1 oder 2, **dadurch gekennzeichnet, dass** die Funktion F die Form $F(x) = F' (M_K(x))$ aufweist.

4. Kryptographieverfahren nach einem der Ansprüche 1 oder 2, **dadurch gekennzeichnet, dass** die Kodierungsfunktion F' in zwei Funktionen F'' und G'' aufgeteilt ist und dass

$$F(x) = F'' (M_K(G''(x))).$$

5. Kryptographieverfahren nach einem der Ansprüche 1-4, **dadurch gekennzeichnet, dass** der Dekorrelationsmodul $M_K$ invertierbar ist.

6. Kryptographieverfahren nach Anspruch 5, **dadurch gekennzeichnet, dass** der Dekorrelationsmodul $M_K(x) = ax + b$ ist, wobei $K = (a, b)$ mit $a \neq 0$.

7. Kryptographieverfahren nach Anspruch 5, **dadurch gekennzeichnet, dass** der Dekorrelationsmodul $M_k(x) = \frac{a}{x + b} + c$, wobei $K = (a, b, c)$ mit $a \neq 0$.

8. Kryptographieverfahren nach einem der Ansprüche 1-4, **dadurch gekennzeichnet, dass** der Dekorrelationsmodul $M_K$ nicht invertierbar ist.

9. Kryptographieverfahren nach Anspruch 5, **dadurch gekennzeichnet, dass** die Funktion F eine Feistelfunktion ist, welche n Iterationen jeweils mit einer Funktion $F_i$ anwendet.

10. Kryptographieverfahren nach Anspruch 9, **dadurch gekennzeichnet, dass** bei jeder Iteration $F_i(x) = F'_i(M_K(x))$.

11. Kryptographieverfahren nach Anspruch 9, **dadurch gekennzeichnet, dass** bei jeder Iteration $F_i(x) = F''_i(M_K(G''_i(x)))$.

12. Kryptographieverfahren nach Anspruch 11, **dadurch gekennzeichnet, dass** $M_K(x) = k_1 + k_2 x + k_3 x^2 + ... + k_t x^{t-1}$, wobei $K = (k_1, k_2, k_3, ..., k_t)$.

**Claims**

1. Method for the cryptography of data stored on a medium exploitable by a computing unit in which said computing unit processes an input information x by means of a key to provide information F(x) encoded by a function F, **characterised in that** the function F uses a decorrelation module $M_K$, of rank at least equal to two, such that $F(x) = [F'(M_K)](x)$, where K is a random key and F' a cryptographic function.

2. Cryptography method according to claim 1, **characterised in that** the input information x is divided up into elements $x_0$ of fixed length.

3. Cryptography method according to any one of claims 1 and 2, **characterised in that** the function F is of the form $F(x) = F'(M_K(x))$.

4. Cryptography method according to any one of claims 1 and 2, **characterised in that** the coding function F' is divided up into two functions F" and G" and **in that**

$$F(x) = F''(M_K(G''(x))).$$

5. Cryptography method according to any one of claims 1 to 4, **characterised in that** the decorrelation module $M_K$ is inversible.

6. Cryptography method according to claim 5, **characterised in that** the decorrelation module is $M_K(x) = ax + b$, where $K = (a, b)$ with $a \neq 0$.

7. Cryptography method according to claim 5, **characterised in that** the decorrelation module is $M_K(x) = a/(x + b) + c$, where $K = (a, b, c)$ with $a \neq 0$.

8. Cryptography method according to any one of claims 1 to 4, **characterised in that** the decorrelation module $M_K$ is non-inversible.

9. Cryptography method according to claim 5, **characterised in that** the function F is a Feistel function applying n iterations each with a function $F_i$.

10. Cryptography method according to claim 9, **characterised in that**, at each iteration, $F_i(x) = F'_i(M_K(x))$.

11. Cryptography method according to claim 9, **characterised in that**, at each iteration, $F_i(x) = F''_i(M_K(G''_i(x)))$.

12. Cryptography method according to claim 11, **characterised in that** $M_K(x) = k_1 + k_2 x + k_3 x^2 + ... + k_t x^{t-1}$, where $K = (k_1, k_2, k_3,..., k_t)$.

FIG. 1